# EUROPEAN PATENT APPLICATION

(11) **EP 2 722 159 A1**
(43) Date of publication of application: **23.04.2014**
(21) Application number: 12799786.4
(22) Date of filing: 11.06.2012
(51) Int. Cl.: B29C 67/00, B01D 39/16

(54) **STRUCTURE AND PRODUCTION METHOD THEREFOR**

(30) Priority: 17.06.2011 JP 2011134937
(71) Applicant: Sony Corporation, Tokyo 108-0075 (JP)
(72) Inventor: YASUKOCHI, Hiroyuki, Tokyo 108-0075 (JP)
(74) Representative: Müller - Hoffmann & Partner
(86) International application number: PCT/JP2012/003780
(87) International publication number: WO 2012/172770

(57) **Abstract**

[Object] To provide a structure of a novel shape and a method of producing it.

[Solving Means] A structure according to the present disclosure includes a wall portion, a first opening region, and a plurality of second opening regions. The plurality of second opening regions is provided so as to be aligned in a regular manner in the wall portion. Each of the second opening regions has a second aperture area smaller than the first aperture area.

## Description

### Technical Field

The present disclosure relates to structures and methods of producing them.

### Background Art

A stereolithography object described in Patent Document 1 is used as a three-dimensional model of an article to be designed. In this three-dimensional model, a portion corresponding to a thick part of the designed article is formed in a hollow shape. The hollow part inside is formed into a honeycomb-like structure. This would reduce variations in intensity which depends on sites of the three-dimensional model (for example, see paragraph [0020] in the description of Patent Document 1).

Patent Document 1: Japanese Patent Application Laid-open No. 2002-347125

### Summary of Invention

### Problem to be solved by the Invention

As a structure, realization of a structure of a novel shape is demanded.

In view of the above circumstances, an object of the present disclosure is to provide a structure of a novel shape and a method of producing it.

### Means for solving the Problem

In order to achieve the above object, a structure according to the present disclosure includes a wall portion, a first opening region, and a plurality of second opening regions.

The first opening region has a first aperture area and is formed by being surrounded by the wall portion.

The plurality of second opening regions is provided so as to be aligned in a regular manner in the wall portion. Each of the second opening regions has a second aperture area smaller than the first aperture area.

In the wall portion surrounding the first opening region, the second opening regions with the aperture areas smaller than the aperture area of the first opening region are provided, and thus can provide a structure of a novel shape.

The structure may further include some third opening regions. The third opening regions form the second opening regions. The third opening regions are provided so as to be aligned in a regular manner around the second opening region at the wall portion. The third opening regions have third aperture areas smaller than the second aperture areas. By that the second and third opening regions are provided in the wall portion, it is able to increase the aperture ratio as much as possible.

The first opening region and the plurality of second opening regions may each be opened in the same direction. Further, the first opening region, the plurality of second opening regions, and the plurality of third opening regions may each be opened in the same direction.

The structure may have a self-similar shape. In other words, the shape itself of the structure may be the same as the shape of the wall portion of a size larger than that.

At least the first opening region may be in an arrangement and shape of honeycomb-like structure. This is able to increase the strength of the structure.

A method of producing a structure according to the present disclosure feeds a material which is curable by the energy of the energy beam, to a feed region.

A selected region among all areas of the material being fed to the feed region is irradiated with the energy beam.

By the irradiation of the energy beam, it forms a structure which includes a wall portion, a first opening region having a first aperture area, formed by being surrounded by the wall portion, and a plurality of second opening regions provided so as to be aligned in a regular manner in the wall portion, each of which second opening regions has a second aperture area smaller than the first aperture area.

The structure may be formed in the following manner using a structure forming apparatus including a stage and a regulation member. The regulation member has a surface including a linear region extending along a first direction. The regulation member is disposed facing the stage so that the linear region of the surface is closest to the stage.

In the feeding of the material, the material is fed to a slit region which is between the linear region and a region on the side where the stage is arranged.

The method of producing the structure further may move the regulation member and the stage relatively along a second direction different from the first direction to thereby form a cured layer of the material of at least one layer.

### Effect of the Invention

As described above, according to the present disclosure, it is able to provide a structure of a novel shape.

### Brief Description of Drawings

[Fig. 1] Figs. 1A and 1B are plan views showing a structure according to a first embodiment of the present disclosure.
[Fig. 2] Fig. 2 is a plan view showing a structure according to a second embodiment of the present disclosure.
[Fig. 3] Fig. 3 is a plan view showing a structure according to a third embodiment of the present disclosure.
[Fig. 4] Fig. 4 is a plan view showing a structure according to a fourth embodiment of the present disclosure.
[Fig. 5] Fig. 5 is a side view showing a structure forming apparatus according to an embodiment of the present disclosure.
[Fig. 6] Fig. 6 is a side view of the structure forming apparatus as seen from the Z-axis.
[Fig. 7] Fig. 7 is a schematic side view showing the structure forming apparatus; and a block diagram showing a configuration of its control system.
[Fig. 8] Fig. 8 is a figure showing an enlarged view of a regulation member.
[Fig. 9] Figs. 9A to 9C are figures showing an operation of the structure forming apparatus in order.
[Fig. 10] Figs. 10A to 10D are figures showing enlarged views of the region between the regulation member and the stage at the time of the operation.

### Mode(s) for Carrying Out the Invention

Hereinafter, with reference to the drawings, some embodiments of the present disclosure will be described.

### [First embodiment of structure]

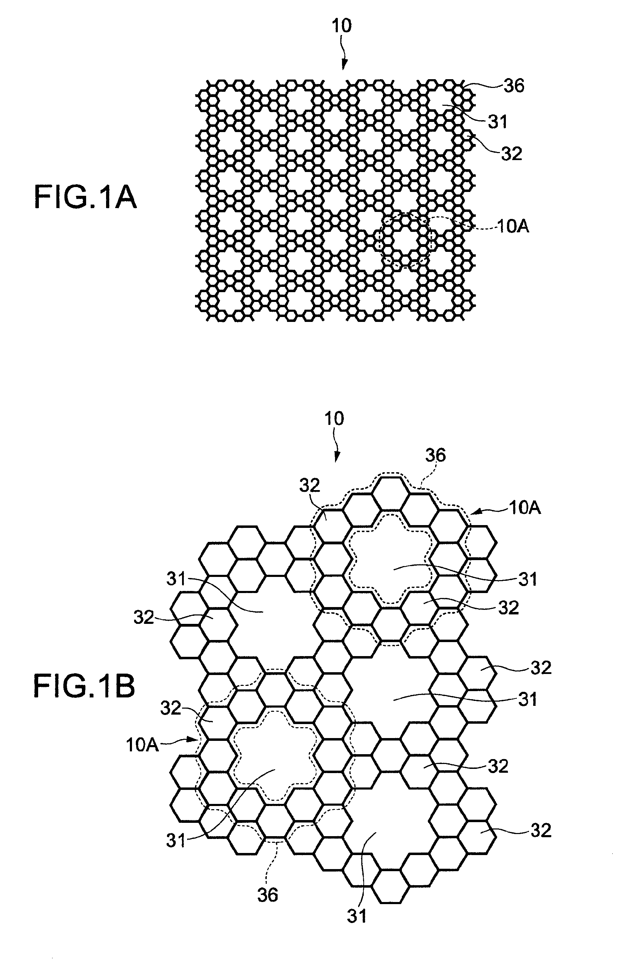

Fig. 1A is a plan view showing a structure according to a first embodiment of the present disclosure.

This structure 10 is a two-dimensional spread (sheet-like or film-like) structure which typically has a relatively thin uniform thickness in the direction of thickness (the direction perpendicular to the plane of Fig. 1A). The structure 10 is formed in a uniform shape in the direction of its thickness.

Fig. 1B is a figure showing an enlarged view of this structure 10. The structure 10 includes a wall portion 36, a plurality of first opening regions 31 formed by being surrounded by the wall portion 36, and a plurality of second opening regions 32 which is provided in the wall portion 36. These first and second opening regions 31 and 32 are provided so as to be aligned in a regular manner. The wall portion 36 is formed by an assembly of the opening regions 32 being aligned in a regular manner.

The directions in which these opening regions 31 and 32 are opened (the slopes of planes of the opening end) are each the direction perpendicular to the plane of Figs. 1A and 1B, which are the same direction.

The term "opened in the same direction" means that the directions of the openings are substantially the same. This means that the directions of the openings are aligned to match the direction which has been "intended" by the designer of the structure. Therefore, for example, even if the direction in which one opening region is opened is shifted from the other ones of the plurality of opening regions by a strictly small angle not intended by the designer (for example, its plane of the opening end is shifted from the plane of the figure by a very small angle), these directions are substantially the same.

The form of regularity in alignment of each set of the opening regions 31 and 32 may be various. However, there is at least one condition: the pitch of the opening regions 31 (and 32) is constant.

The aperture area of the second opening region 32 (a second aperture area) is formed smaller than the aperture area of the first opening region 31 (a first aperture area). The first opening regions 31 are in an arrangement and shape of honeycomb-like structure. The second opening regions 32 are also in an arrangement and shape of honeycomb-like structure. The shape of aperture plane of the second opening region 32 is a regular hexagon. The shape of aperture plane of the first opening region 31 is a near-regular hexagonal shape (specifically, an asterisk (*) shape).

This structure 10 has a self-similar shape (fractal shape). That is, an assembly of certain unit structures (in this case, the second opening regions 32 which are the smallest regular hexagons) forms a structure larger in size but similar in shape to the unit structures. In this case, a predetermined number of the second opening regions 32 are assembled aligned in a regular manner, and thus the first opening region 31 which is substantially similar in shape to the second opening region 32 is formed.

### [Second embodiment of structure]

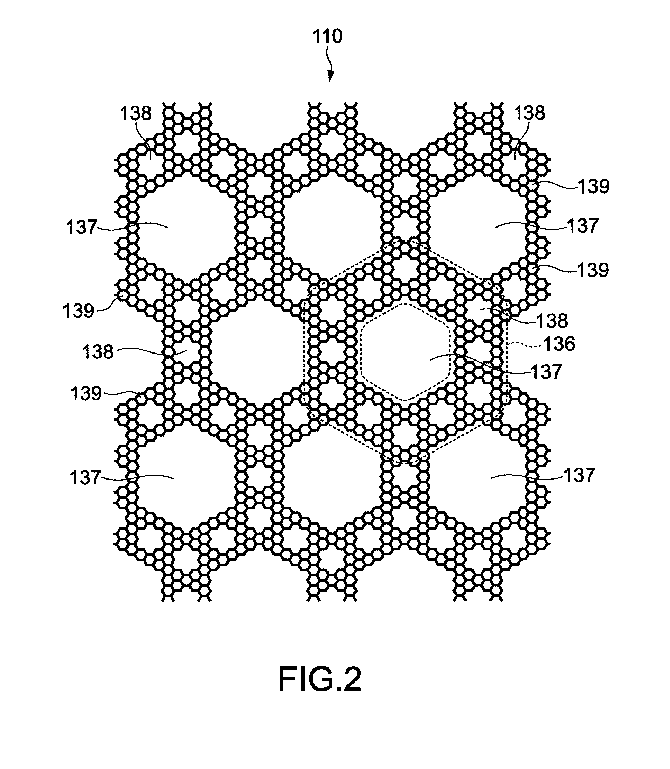

Fig. 2 is a plan view showing a structure according to a second embodiment of the present disclosure.

This structure 110 includes a wall portion 136, a plurality of first opening regions 137 formed by being surrounded by the wall portion 136, a plurality of second opening regions 138 which is provided in the wall portion 36 and a plurality of third opening regions 139 forming (the walls of) these second opening regions 138. The first opening region 137 has a substantially regular-hexagonal shape.

This structure 110 has a self-similar shape of the structure 10 according to the first embodiment above. That is, the structure 10 itself, which is shown in Fig. 1, forms the wall portion 136 of the structure 110 shown in Fig. 2. In other words, when the unit structure is a portion 10A surrounded by the broken line as shown in Fig. 1A, the structure 110 is a structure obtainable by forming an even larger opening region (the first opening region 137 in Fig. 2) by the unit structures 10A.

The directions in which these opening regions 137, 138, and 139 are opened are each the direction perpendicular to the plane of Fig. 2, which are the same direction.

As described above, by the shape of the structure 110 having a self-similarity, it is possible to realize structures having an infinite number of shapes. For example, by using the structure 110 shown in Fig. 2 as the wall portion 136, it is able to form a plurality of opening regions being surrounded by the wall portion 136.

### [Third embodiment of structure]

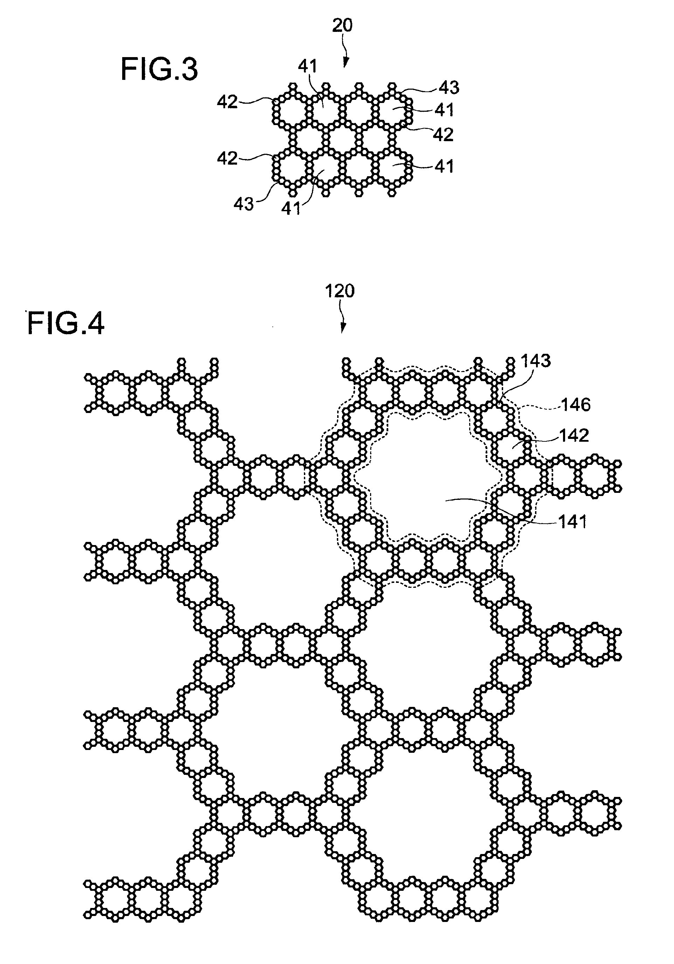

Fig. 3 is a plan view showing a structure according to a third embodiment of the present disclosure. In the description hereinafter, the same part as the structures 10 and 110 of the embodiments shown in Figs. 1 and 2 will be simplified or omitted, and different point(s) will be mainly described.

A structure 20 shown in Fig. 3 includes a wall portion 43 forming a first opening region 41. The wall portion 43 is formed by a plurality of second opening regions 42. A difference between the structure 10 (see Fig. 1) and the structure 20 is that the number of the second opening regions 42 to form one first opening region 41 of the structure 20 is different from that of the structure 10.

### [Fourth embodiment of structure]

Fig. 4 is a plan view showing a structure according to a fourth embodiment of the present disclosure.

A structure 120 includes a first opening region 141, a plurality of second opening regions 142, and a plurality of third opening regions 143, which are surrounded by a wall portion 146. The wall portion 146 is formed by the structure 20 according to the third embodiment above. That is, the structure 120 has a self-similar shape of the structure 20.

### [Application examples of structures]

In the following, some application examples of the respective structures 10,110, 20 and 120 of the embodiments above will be described.

These structures may be utilized as filters.

Usually, if the aperture ratio of a filter is increased, the aperture area of the filter is enlarged. Thus, the thickness of the portion forming the opening thereof becomes thin, and lowers the strength of the filter. Conversely, if the aperture ratio of a filter is reduced to increase the thickness of the wall, it lowers the flow rate of a fluid passing through the filter. That is, the pressure loss would be increased.

When the structure of the present disclosure is used as a filter, the aperture ratio would be larger, and thus the conformation of such a structure is able to increase the surface area per unit mass of the material.

Specifically, by the opening regions being provided in the wall portion, it is able to suppress a decrease in the flow rate of a fluid to pass through the filter (low in pressure loss) while providing high strength. In particular, by using a honeycomb-like structure, it is possible to obtain sufficient strength and rigidity.

In addition, for example, in the structures 110 and 120 shown in Figs. 2 and 4, even if a part or all of the sides forming a single one of the third opening regions 139 and 143 is destroyed, the wall forming a single one of the second opening regions 138 and 142 is not destroyed as a whole. Thus, there is a redundancy to maintain the expected performance of the filter.

The structure according to the present disclosure may have a coating film formed on its surface by plating, for example. The plating may be of any kind, such as metal plating and resin plating. By subjecting the structure to plating, for example, it is possible to give the structure a variety of properties such as hydrophobicity (e.g., fluorine materials), hydrophilicity (e.g., silica materials and titanium oxide materials), antifouling property (e.g., titanium materials and carbon materials) and heat resistance (e.g., nickel, chromium and titanium).

For example, by subjecting the structure to metal plating, followed by subjecting it to resin plating, it allows the structure to be utilized as a metal fiber reinforced plastic material.

### [Method of producing structures]

The structures 10, 110, 20 and 120 shown in Figs. 1 to 4 may be formed by a method of a modeling apparatus, for example.

The modeling apparatus irradiates with the energy beam a selected region, based on three-dimensional design data of an intended structure, among all areas of the material which has been fed. The fed material is thereby partially cured. Thus, it is able to form a structure of any shape.

A typical example of the energy beam is light, and in particular, ultraviolet rays may be used. In this case, an ultraviolet curable resin may be employed as the material. The energy beam is not limited to ultraviolet rays but may be infrared rays, visible light, electron beam, ultrasonic wave or the like. The infrared rays, ultrasonic wave or the like may be employed in the cases of forming a shaped object with relatively low modeling accuracy. As the light irradiation, typically, laser irradiation may be used.

However, with the use of the modeling apparatus (structure forming apparatus) described in the following, it is possible to form a structure with high accuracy at a practical speed and cost.

### (Structure forming apparatus)

In the following, a structure forming apparatus will be described. This structure forming apparatus basically employs the principle of a modeling apparatus. A structure that is formed by the structure forming apparatus may be utilized not only as a model, but as an actual product.

### (Configuration of structure forming apparatus)

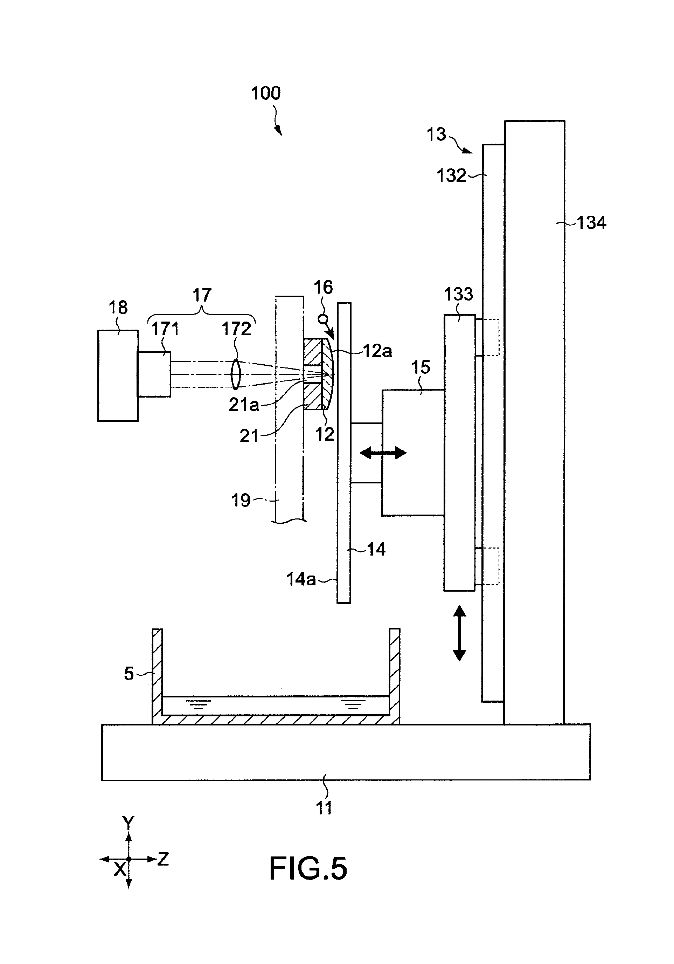

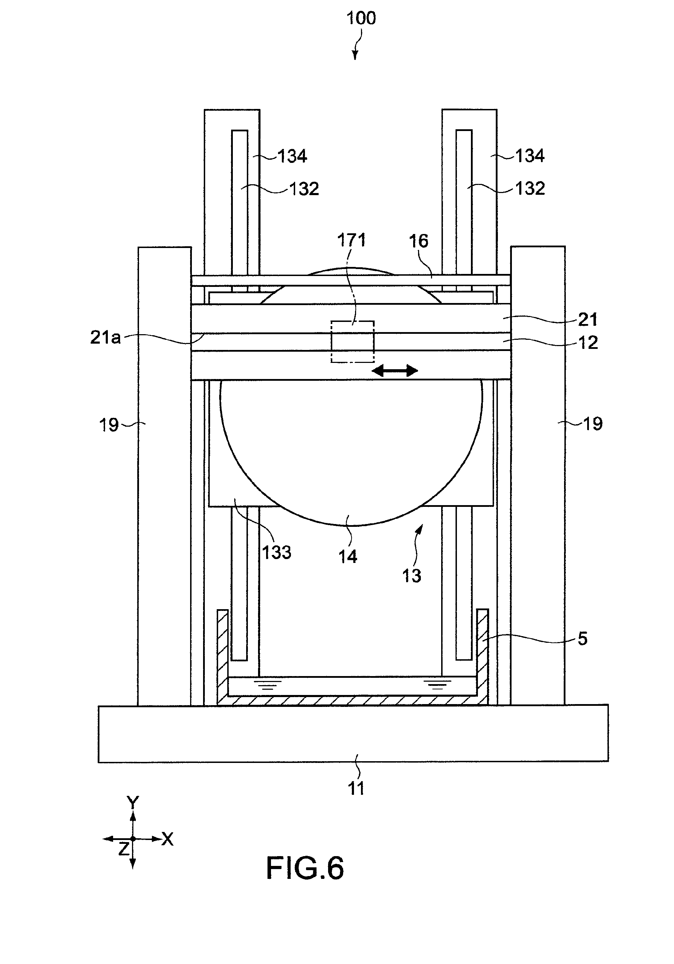

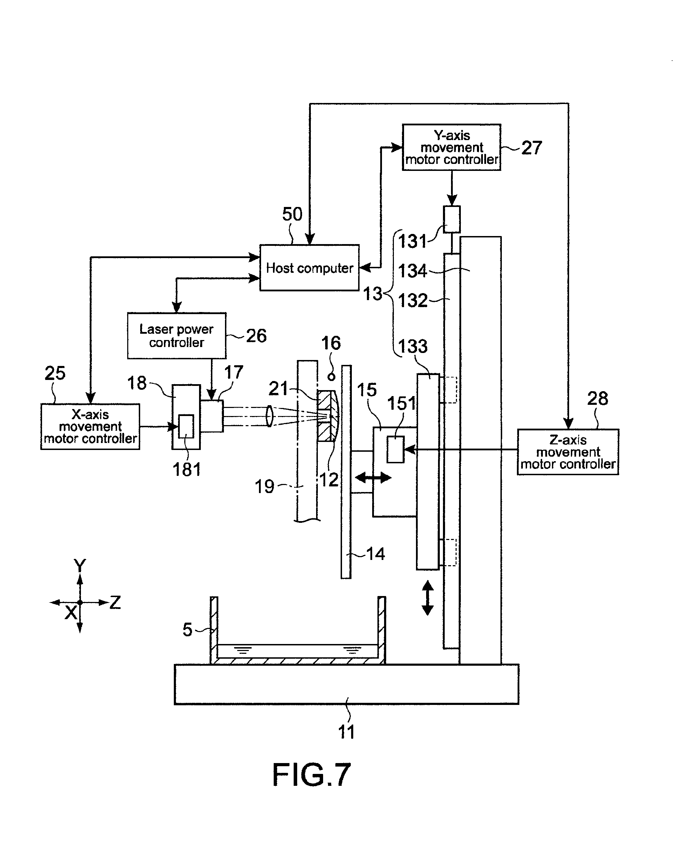

Fig. 5 is a side view showing a structure forming apparatus according to an embodiment of the present disclosure. Fig. 6 is a side view of the structure forming apparatus as seen from the Z-axis. Fig. 7 is a schematic side view showing the structure forming apparatus; and a block diagram showing a configuration of its control system. The X-, Y-, and Z-axes in the figure are three mutually orthogonal axes.

A structure forming apparatus 100 includes a base 11, a Y-axis movement mechanism 13 vertically provided on the base 11, a Z-axis movement mechanism 15 connected to the Y-axis movement mechanism 13 and a stage 14 connected to the Z-axis movement mechanism 15. The structure forming apparatus 100 further includes an irradiation unit 17 which emits as the energy beam, for example, laser light such as ultraviolet rays to the stage 14. The structure forming apparatus 100 further includes a regulation member 12 which is disposed facing the stage 14; and a feeding nozzle 16 which feeds a material such as an ultraviolet curable resin which is curable by the laser light, to the space between the stage 14 and the regulation member 12.

The Y-axis movement mechanism 13 has a Y-axis movement motor 131 (see Fig. 7), support columns 134 vertically provided on the base 11, guiderails 132 each laid along the Y-axis direction (second direction) on the support column 134 and a movable base 133 connected to the guiderails 132 to be movable by the Y-axis movement motor 131 along the guiderails 132.

The Z-axis movement mechanism 15 has a Z-axis movement motor 151 (see Fig. 7) and is configured to be capable of moving the stage 14 in the Z-axis direction. The stage 14 is formed in a circular shape as shown in Fig. 6, for example, but this may be a square or other shapes. By the Y-axis movement mechanism 13 and the Z-axis movement mechanism 15, the stage 14 is movable along the Y- and Z-axis directions. The Z-axis movement mechanism 15 controls the distance between a surface 14a of the stage 14 and a certain region (linear region A1 which will be described later) of a surface 12a of the regulation member 12, which region is the closest to the stage 14 out of the surface 12a. The Y-axis movement mechanism 13 and the Z-axis movement mechanism 15 serve as a "movement mechanism".

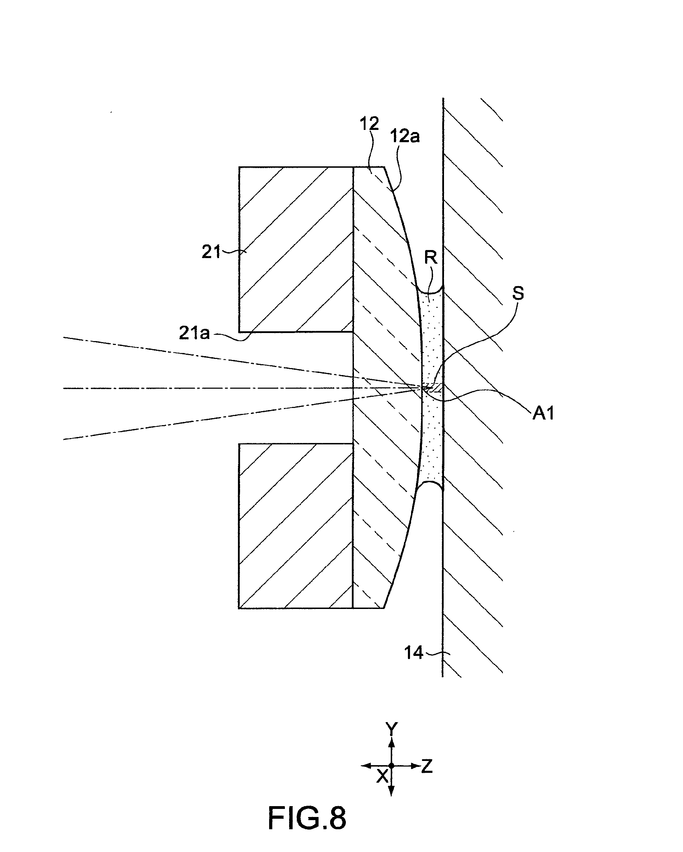

The regulation member 12 regulates the thickness along the Z-axis direction of the material fed to the surface 14a of the stage 14 from the feeding nozzle 16. Fig. 8 is a figure showing an enlarged view of the regulation member 12. The regulation member 12 has a shape in a part of a cylindrical shape (cylindrical lens shape). That is, the surface 12a of the regulation member 12 facing the stage 14 is a curved surface, which curved surface is formed into a cylindrical surface.

As shown in Fig. 6, the regulation member 12 is formed in a long shape along a certain direction (X-axis direction). The regulation member 12 is attached to some support columns 19 by a fixture 21. The fixture 21 has a slit 21a formed therein along the X-axis direction (first direction). The laser light coming from the irradiation unit 17 becomes incident on the regulation member 12 through this slit 21a.

The regulation member 12 may be formed of glass, acrylic, or other transparent material. The regulation member 12 may be any material that transmits the energy beam with a predetermined transmittance. The surface 12a of the regulation member 12 may have a film coated thereon to increase the contact angle of the material, that is, a hydrophobic film (e.g., fluorine or the like).

As shown in Fig. 8, the stage 14 is allowed to be positioned by the Z-axis movement mechanism 15 so as to form a slit region S in between the stage 14 and the surface 12a of the regulation member 12. The slit region S is formed by the surface 14a of the stage 14 facing the linear region A1 extending along the X-axis direction, which linear region A1 is the part closest to the stage 14 out of the surface 12a of the regulation member 12. This linear region A1 is a part of the surface 12a of the regulation member 12.

The width in the Y-axis direction of this linear region A1 is from 0.1 to 1 mm. In addition, a spot diameter of the laser light irradiated from the irradiation unit 17, which will be described later, is from 1 to 100 µm. However, the width of the linear region A1 and the spot diameter may be appropriately changed depending on size of the regulation member 12, size of the shaped object (structure), modeling accuracy and the like, and may be values outside these ranges.

The feeding nozzle 16 has an elongated shape along the X-axis direction. The feeding nozzle 16 is disposed above the regulation member 12 and is attached to the support column 19 via a support member, by a member not shown in the figure, for example. As the feeding nozzle 16, it may employ a nozzle of a type which has a plurality of holes (not shown) along its longitudinal direction for discharging a photo-curable material R (see Fig. 8). Alternatively, a slit coat type nozzle which has a slit along its longitudinal direction may be employed as the feeding nozzle 16.

To the feeding nozzle 16, for example, parts for introducing the photo-curable material R into the feeding nozzle 16 such as a pump, pipes, and an open-and-close valve, which are not shown in the figure, are connected.

As shown in Fig. 5, the irradiation unit 17 includes a laser light source 171 and an objective lens 172 to narrow the beam spot of the laser light emitted from the laser light source 171. These laser light source 171 and objective lens 172 are held integrally by a holder (not shown). The objective lens 172 focuses on the photo-curable material R in the slit region S or in the area including the slit region S and the vicinity thereof, via the regulation member 12. That is, the objective lens 172 is disposed at the position on the optical axis of the laser light where the focal point thereof at least coincides with the photo-curable material R in the slit region S.

In cases where the laser light emitted from the irradiation unit 17 is ultraviolet rays, an ultraviolet curable resin may be employed as the photo-curable material R.

Further, the above-mentioned "movement mechanism" include an X-axis movement mechanism (scanning mechanism) 18 equipped with an X-axis movement motor 181 (see Fig. 7) to move the irradiation unit 17 along the X-axis direction integrally therewith. By the X-axis movement mechanism 18, the irradiation unit 17 is able to scan along the X-axis direction with the laser light emitted from the laser light source 18.

A polygon scanner or a galvano-scanner may also be used as the X-axis movement mechanism.

The slit 21a of the fixture 21 is formed in a long shape along the X-axis direction. Consequently, the X-axis movement mechanism 18 is able to allow the laser light to enter the regulation member 12 through that slit 21a when scanning with the laser light.

The Z-axis movement mechanism 15, the Y-axis movement mechanism 13, and the X-axis movement mechanism 18 may be realized by a ball screw drive mechanism, rack-and-pinion drive mechanism, belt drive mechanism or others, for example.

There is a waste tank 5 at a position which is on the base 11 and under the stage 14. The waste tank 5 is made to be able to receive the excess photo-curable material discharged from the feeding nozzle 16 which flows down the stage 14, or the like.

Incidentally, there have been two support columns 134 and two support columns 19 provided (see Fig. 6). However, these may be provided as one support column 134 and one support column 19, each positioned roughly in the center in the X-axis direction of the base 11.

As shown in Fig. 7, the structure forming apparatus 100 includes a Z-axis movement motor controller 28 to control the Z-axis movement motor 151 drive, a Y-axis movement motor controller 27 to control the Y-axis movement motor 131 drive, and the X-axis movement motor controller 25 to control the X-axis movement motor 181 drive. The structure forming apparatus 100 further includes a laser power controller 26 to control the power of the laser light emitted from the laser light source 171. The operations of the respective controllers 25 to 28 are controlled in an integrated way by a host computer 50. Although not shown, the structure forming apparatus 100 further includes a controller for driving the pump and the open-and-close valve connected to the feed nozzle 16.

The computer 50 includes a CPU (Central Processing Unit), RAM (Random Access Memory), ROM (Read Only Memory) and the like. In place of the CPU, a PLD (Programmable Logic Device) such as FPGA (Field Programmable Gate Array) and ASIC (Application Specific Integrated Circuit) may be employed as well. Each of the controllers 25 to 28 may individually include such hardware, and/or may be configured by software.

Typically, the host computer 50 and each of the controllers 25 to 28 may be connected by wire with each other, and/or at least one of these controllers may be connected in a wireless manner to a control system in the structure forming apparatus 100.

### (Operation of structure forming apparatus)

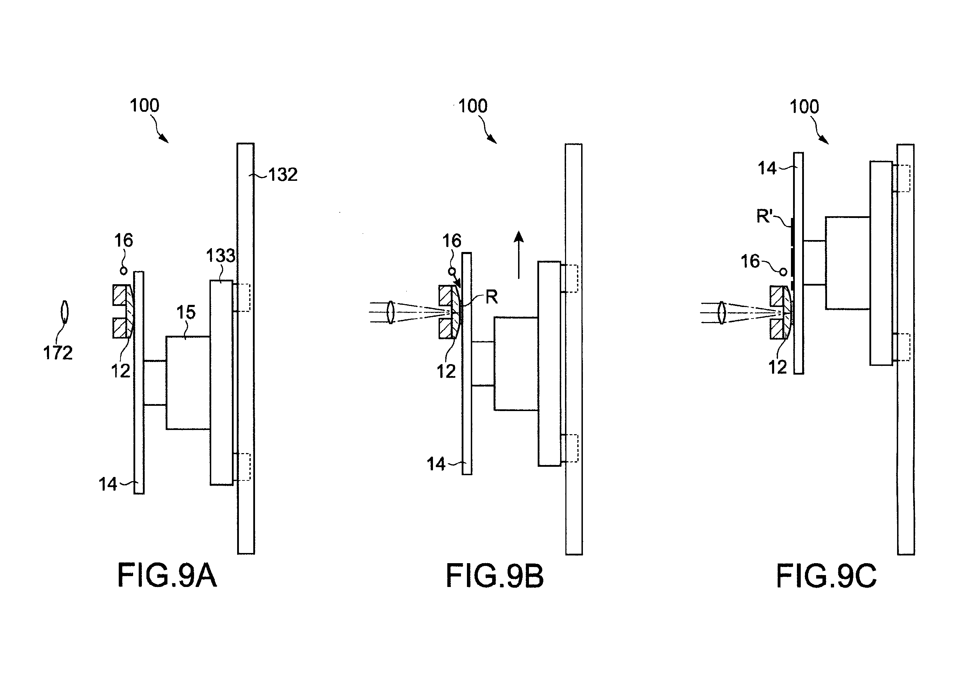

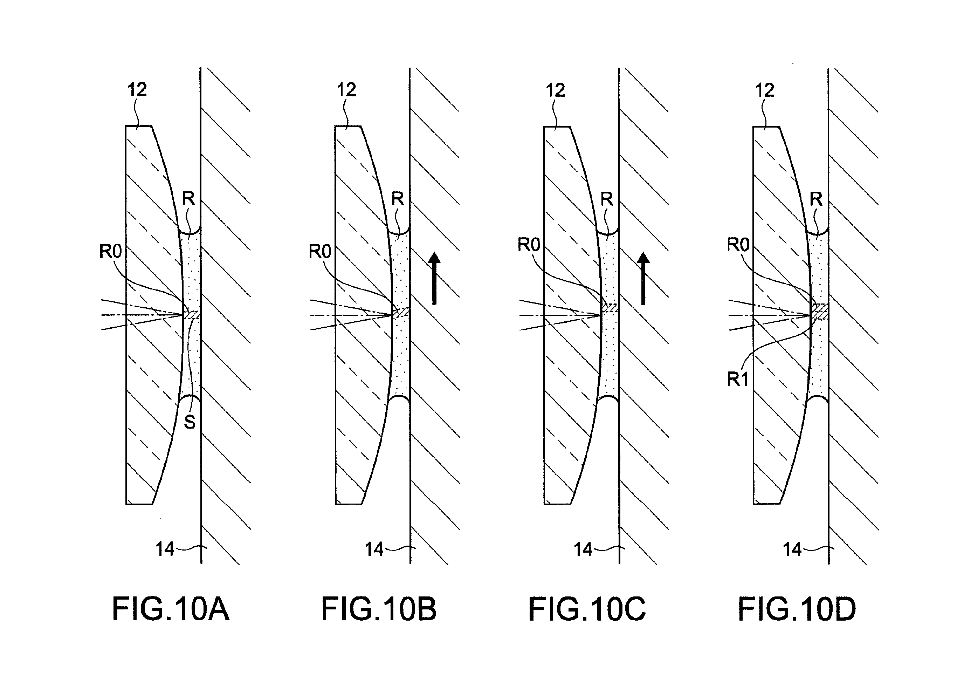

Next, an operation of the structure forming apparatus 100 which has been configured as above will be described. Figs. 9A to 9C are figures showing an operation thereof in order. Figs. 10A to 10D are figures showing enlarged views of the region between the regulation member 12 and the stage 14 at the time of the operation.

Fig. 9A shows the structure forming apparatus 100 in a resting state. It shows a state where the movable base 133 is in an initial position. Before performing the actual modeling, a thickness of one layer of a cured layer of the photo-curable material R is set via the host computer. Further, for example, by the Z-axis movement mechanism 15 driven in accordance with the control of the Z-axis movement motor controller 28, the position at the height where the stage 14 is positioned when in contact with the linear region A1 (see Fig. 9A) is set as the origin of the Z-axis direction, the linear region A1 being the nearest part to the stage 14 of the regulation member 12.

Incidentally, the position of the stage 14 in the Y-axis direction at the time of setting this origin can be set as appropriate.

After the setting of the origin, the stage 14 moves away from the regulation member 12 by a predetermined distance as the thickness of one layer of the photo-curable material R.

After the stage 14 moved away from the regulation member 12, the stage 14 moves by the Y-axis movement mechanism 13 to a modeling start position, which position is a predetermined position as shown in Fig. 9B. This modeling start position is a position of the stage 14 in the direction along Y-axis where the stage 14 and the linear region A1 of the regulation member 12 can form the slit region S therebetween. The setting of this modeling start position may be appropriately changed depending on size in the Y-axis direction of the structure to be formed, as long as the stage 14 at this position allows the slit region S to be formed.

When the stage 14 is placed at the modeling start position, the photo-curable material R would be discharged from the feeding nozzle 16 to flow down by its own weight in between the regulation member 12 and the stage 14. Thus, the photo-curable material R fills at least the slit region S. The photo-curable material R would be held between the regulation member 12 and the stage 14 by the surface tension. That is, the regulation member 12 regulates the liquid level of the photo-curable material R in one-dimensional region along the X-axis direction by the linear region A1. The state of the slit region S and the surrounding area at this time is shown by an enlarged view in Fig. 8. From such a state, a laser light irradiation onto the photo-curable material R, or in other words, an exposure begins.

The irradiation unit 17 irradiates with the laser beam. The laser light emitted from the laser light source 171 passes through the objective lens 172 and the regulation member 12 to enter the photo-curable material R in the slit region S. While the irradiation unit 17 moves in the direction along X-axis by being controlled by the X-axis movement motor controller 25, the irradiation unit 17 allows the exposure of the photo-curable material R selectively in accordance with the control of the laser power controller 26, based on the data corresponding to one row of the X-axis direction in one layer of the modeling object (see Fig. 10A).

Specifically, the laser power controller 26 generates a modulated signal of the laser power in accordance with the above-mentioned data corresponding to one row of the structure, and by sending it to the laser light source 171, it allows the photo-curable material R of one row of the X-axis direction in the material of one layer to be selectively exposed to be cured. At least the photo-curable material R in the slit region S would be exposed. The stage 14 remains stopped during the exposure by the irradiation with the laser light.

The thickness of one layer of the structure may be from 1 to 100 µm, but it is not limited to this range and can be set as appropriate.

In the manner as described above, one row of a cured layer R0 would be formed as shown in Fig. 10A.

Upon finishing the exposure of one row along the X-axis direction of the photo-curable material R, the operation of the laser light irradiation stops. Then, with the movement of the movable base 133 by the Y-axis movement mechanism 13, the stage 14 moves toward the rear side (upper side of Fig. 10B) in the direction along Y-axis by a predetermined pitch. At this time, as shown in Figs. 10B and 10C, the cured material R0 moves with the stage 14, and this gives rise to a shear force between the regulation member 12 and the cured material R0. Thus, the regulation member 12 and the cured material R0 become separated from each other. With the hydrophobic film being formed on the surface of the regulation member 12 as described above, this separation may be made more easily.

Then, the selective exposure of the next row in this first layer (a row next to the first row) would be made in the same manner as the above (see Fig. 10D). Thus, the cured material R1 in that row would be formed.

The structure forming apparatus 100 repeats the scan by irradiation with the laser light along the X-axis direction and the step feed of the stage 14 along the Y-axis direction as described above, and thus forms the selectively cured layer of the photo-curable material R of one layer, or in other words, a cured layer R' of one layer, as shown in Fig. 9C. Thus, an exposure process of one layer is performed in a manner of so called raster scanning.

The pitch of such an intermittent movement of the stage 14 in the direction along Y-axis may depend on the spot diameter of the laser beam, or in other words, it may depend on the resolution in forming the structure. This pitch of movement can be set as appropriate.

When the exposure of the photo-curable material R of one layer is finished, the stage 14 moves so as to be further away from the regulation member 12 in the Z-axis direction. Then, by repeating the operation as has been described so far, it allows the cured layers R' to be laminated, thereby forming the structure of any shape.

As described above, with the surface 12a of the regulation member 12 being formed into a cylindrical surface such that the linear region A1 of the regulation member 12 is the closest to the stage 14, as the stage 14 moves along the Y-axis direction, the linear region A1 of the regulation member 12 moves relatively away from the stage 14 along the Z-axis direction. Thus, the shear force arises, as mentioned above, and it allows the cured material (such as R0 and R1 shown in Figs. 10B and 10D) to be cleanly peeled off from the regulation member 12.

In the liquid level regulation method of the past, there has also been a problem that a flatness of the structure would become poor due to distortion of a film or a glass surface. In contrast, in this embodiment, the surface shape of the regulation member 12 is a cylindrical surface, in which, the linear region A1 regulates the liquid level of the photo-curable material. Therefore, even when the shrinkage force in the curing of the photo-curable material is applied to the regulation member 12, deformation or distortion does not easily occur in the regulation member 12. Furthermore, it is also able to prevent deformation of the regulation member 12 due to the viscosity of the photo-curable material before exposure. Thus, it is able to improve the flatness of the cured layer, and further, it is able to regulate its thickness with high accuracy. As a result, such structures as shown in Figs. 1 to 4 can be formed in smaller sizes.

The structure forming apparatus 100 is able to form a small-size structure, for example, with a diameter (in this case, a distance from a vertex in the second opening region to an opposite vertex thereof) of the aperture plane of the second opening region in the structure as seen in a plane of Fig. 1 of from 5 to 10 µm or the like. As a matter of course, the structure whose size is larger than this may be formed, also by a structure forming apparatus of the past.

In the liquid level regulation method of the past, it has been taking time for a process of peeling off the structure from a film or a glass surface. In contrast, in this embodiment, the structure is allowed to be peeled off from the regulation member 12 at the time of the exposure process with each step feed of the stage 14 along the Y-axis direction. In other words, as the time period of the exposure process of one layer and that of the peel-off process are overlapped, it is able to decrease the length of time it takes to form the structure.

In this embodiment, as the liquid level of the photo-curable material is regulated by the linear region A1, it is made possible to form the structure with an accurate layer thickness even when a resin material with high viscosity is employed. Therefore, it expands the range of choice of materials to employ.

In this embodiment, in the linear region A1 of the regulation member 12, the peeling off of the regulation member 12 from the side where the stage 14 is located would be made in an intermittent manner (with each step feed along the Y-axis direction), by a very small amount each time. Therefore, the peeling force is weak, so it can prevent damage to the cured material. In other words, it is easy to peel off the cured material from the regulation member 12. Further, with such a weak peeling force, it is less likely to cause things such as peeling of the cured material from the stage 14.

As described above, with the use of the structure forming apparatus 100 according to this embodiment, it is possible to form the structures shown in Figs. 1 to 4 with high accuracy, at a practical speed and cost.

### [Other embodiments]

The present disclosure is not limited to the embodiments described above and various other embodiments are possible.

The structures 10, 110, 20 and 120 according to the respective embodiments above have had their first opening regions and the second opening regions (and the third opening regions) opened in the same direction. However, the directions in which they are opened may be different directions. For example, in the case where the direction in which the first opening regions 31 shown in Fig. 1A are opened is perpendicular to the plane, the direction in which the second opening regions are opened may be parallel to the plane, or in other words, it may be a direction perpendicular to the thickness direction of the structure 10. Similarly, the second opening regions shown in Fig. 3 and the third opening regions shown in Figs. 2 and 4 may also be in the direction perpendicular to the thickness direction of the structure.

The structures 10, 110, 20 and 120 according to the respective embodiments above have had a self-similar shape. However, these may not be limited to self-similar shapes. The structure may have any shape as long as the structure is provided with the second opening regions aligned in a regular manner in the wall portion forming a first opening region, with the aperture areas of the second opening regions each being smaller than the aperture area of the first opening region.

For example, the shapes of the first and second opening regions may be circular, elliptical or a shape having three or more corners such as rectangular. In this case, the shapes of the first and second opening regions may be different shapes. In cases where the structure has a self-similar shape, the same can be said of the shapes of the next opening regions of the third, the fourth, and so on.

Further, the structures according to the respective embodiments above have had the plurality of first opening regions (the opening regions having substantially the same aperture area with each other) in the same shape, but at least one thereof may also be formed in a shape different from the other ones.

The structures according to the respective embodiments above have had a honeycomb-like structure, but these may not be limited honeycomb-like structures.

The regulation member of the structure forming apparatus according to the embodiment above has had a part of a cylindrical shape, but it may have the shape of the whole of the cylindrical shape. In this case, the regulation member may either be a solid type made of a material transparent for the energy beam; or a hollow type.

The surface shape of the regulation member may not necessarily be a cylindrical surface but may be a curved surface of ellipsoid, hyperboloid, or the like. Alternatively, this surface may not necessarily be a curved surface but may be a plane with a narrow width in the Y-axis direction (about from 2 to 5 times the laser spot diameter).

In the embodiments above, during modeling, the regulation member 12 has been standing still and the stage 14 has moved in the Z-axis direction. However, it is not limited to such a manner. The regulation member may move in the Z-axis direction and the stage 14 may be standing still; or both of these may move in the Z-axis direction.

In the embodiments above, in order to form the cured layer of one layer of the structure, the stage 14 has moved in a vertical direction. However, in order to form the cured layer of one layer of the structure, the regulation member and the stage may move relatively in a horizontal direction; or in a direction which includes some vertical-direction component and which is different from the vertical direction, that is, a diagonal direction.

In the embodiments above, in order to form the cured layer of one layer of the structure, the direction in which the regulation member 12 and the stage 14 have moved has been a direction perpendicular to the direction in which the linear region A1 of the regulation member 12 extends (first direction). However, the second direction may be any direction that is different from the first direction, which may be a direction diagonal to the first direction as well.

In the embodiments above, in the X-axis direction, the regulation member 12 and the stage 14 has been standing still and the irradiation unit 17 has moved along the X-axis direction. Alternatively, the irradiation unit may be standing still, and the regulation member and the stage may integrally move along the X-axis direction.

The structure forming apparatus according to the embodiment above has formed the structure by allowing two layers or more of the cured layers to be laminated. However, the structure forming apparatus may form the cured layer of at least one layer, to thereby form a thin structure as shown in Figs. 1 to 4.

In the embodiments above, the structure forming apparatus has been described as an example of an apparatus used for forming the structure. However, for example, in cases where the diameters of the opening regions of the structures shown in Figs. 1 to 4 are in the order of mm, these structures may be formed also by injection molding. In cases where the opening regions are in the order of µm, the structure is so small that it is difficult to be made by injection molding.

At least two features of the features in each embodiment described above may be combined with each other.

The present disclosure may employ the following configurations.
(1) A structure including:
   a wall portion;
   a first opening region having a first aperture area, formed by being surrounded by the wall portion; and
   a plurality of second opening regions provided so as to be aligned in a regular manner in the wall portion, the second opening regions each having a second aperture area smaller than the first aperture area.
(2) The structure according to (1), further including:
   a plurality of third opening regions forming the second opening regions and being provided so as to be aligned in a regular manner around one second opening region of the plurality of second opening regions at the wall portion, the third opening regions each having a third aperture area smaller than the second aperture area.
(3) The structure according to (1), in which
   the first opening region and the plurality of second opening regions are each opened in the same direction.
(4) The structure according to (2), in which
   the first opening region, the plurality of second opening regions, and the plurality of third opening regions are each opened in the same direction.
(5) The structure according to (1), which has a self-similar shape.
(6) The structure according to (1), in which
   at least the first opening region is in an arrangement and shape of honeycomb-like structure.
(7) A method of producing a structure, including:
   feeding a material which is curable by the energy of the energy beam, to a feed region;
   irradiating with the energy beam a selected region among all areas of the material being fed to the feed region; and
   forming, by the irradiation of the energy beam, a structure which includes
      a wall portion,
      a first opening region having a first aperture area, formed by being surrounded by the wall portion, and
      a plurality of second opening regions provided so as to be aligned in a regular manner in the wall portion, the second opening regions each having a second aperture area smaller than the first aperture area.
(8) The method according to (7), which is made using a structure forming apparatus including
   a stage and
   a regulation member which has a surface including a linear region extending along a first direction, and which is disposed facing the stage so that the linear region of the surface is closest to the stage;
   in which method, the feeding of the material allows the material to be fed to a slit region which is between the linear region and a region on the side where the stage is arranged;
   which method further includes moving the regulation member and the stage relatively along a second direction different from the first direction to thereby form a cured layer of the material of at least one layer.

### Description of Symbols

10, 110, 20, 120 structure
12 regulation member
12a surface
13 Y-axis movement mechanism
14 stage
15 Z-axis movement mechanism
16 feeding nozzle
17 irradiation unit
18 X-axis movement mechanism
36, 43, 126, 136 wall portion
31, 137, 41, 141 first opening region
32, 138, 42, 142 second opening region
139, 143 third opening region

## Claims

1. A structure comprising:
a wall portion;
a first opening region having a first aperture area, formed by being surrounded by the wall portion; and
a plurality of second opening regions provided so as to be aligned in a regular manner in the wall portion, the second opening regions each having a second aperture area smaller than the first aperture area.

2. The structure according to claim 1, further comprising:
a plurality of third opening regions forming the second opening regions and being provided so as to be aligned in a regular manner around one second opening region of the plurality of second opening regions at the wall portion, the third opening regions each having a third aperture area smaller than the second aperture area.

3. The structure according to claim 1, wherein
the first opening region and the plurality of second opening regions are each opened in the same direction.

4. The structure according to claim 2, wherein
the first opening region, the plurality of second opening regions, and the plurality of third opening regions are each opened in the same direction.

5. The structure according to claim 1, which has a self-similar shape.

6. The structure according to claim 1, wherein
at least the first opening region is in an arrangement and shape of honeycomb-like structure.

7. A method of producing a structure, comprising:
feeding a material which is curable by the energy of the energy beam, to a feed region;
irradiating with the energy beam a selected region among all areas of the material being fed to the feed region; and
forming, by the irradiation of the energy beam, a structure which includes
a wall portion,
a first opening region having a first aperture area, formed by being surrounded by the wall portion, and
a plurality of second opening regions provided so as to be aligned in a regular manner in the wall portion, the second opening regions each having a second aperture area smaller than the first aperture area.

8. The method according to claim 7, which is made using a structure forming apparatus including
a stage and
a regulation member which has a surface including a linear region extending along a first direction, and which is disposed facing the stage so that the linear region of the surface is closest to the stage;
in which method, the feeding of the material allows the material to be fed to a slit region which is between the linear region and a region on the side where the stage is arranged;
which method further includes moving the regulation member and the stage relatively along a second direction different from the first direction to thereby form a cured layer of the material of at least one layer.
